# EUROPÄISCHE PATENTANMELDUNG

(11) **EP 4 160 906 A1**
(43) Veröffentlichungstag der Anmeldung: **05.04.2023**
(21) Anmeldenummer: 22198017.0
(22) Anmeldetag: 27.09.2022
(51) Int. Cl.: H02P 27/06

(54) **VERFAHREN ZUM REGELN EINER ELEKTRISCH ERREGTEN SYNCHRONMASCHINE**

(30) Priorität: 29.09.2021 DE 102021210909
(71) Anmelder: MAHLE International GmbH, 70376 Stuttgart (DE)
(72) Erfinder: ALBIERI, Gustavo Esteves, 71540 Murrhardt (DE); BUCHALI, Tim, 70374 Stuttgart (DE); KÜRTEN, Claas, 70199 Stuttgart (DE); SCHMÜLLING, Dr. Christoph, 71334 Waiblingen (DE); TOPALOV, Penyo, 70190 Stuttgart (DE); ZIMMERSCHIED, Philipp, 70180 Stuttgart (DE)
(74) Vertreter: BRP Renaud & Partner mbB Rechtsanwälte Patentanwälte Steuerberater

(57) **Zusammenfassung**

Die Erfindung betrifft ein Verfahren (8) zum Regeln einer elektrisch erregten Synchronmaschine (1) mit einem Stator (2) und einem Rotor (3). Dabei strömen in dem Stator (2) ein Stator-Strom und in dem Rotor (3) ein Rotor-Strom. Der Stator-Strom weist dabei einen den Rotor-Strom beeinflussenden d-Anteil und einen das Drehmoment beeinflussenden q-Anteil auf.

Erfindungsgemäß werden ein quelleerzeugter Anteil des Rotor-Stroms über eine Rotor-Quelle (6) des Rotors (3) erzeugt. Ein statorerzeugter Anteil des Rotor-Stroms wird über eine Anpassung des d-Anteils des Stator-Stroms erzeugt und dadurch wird der Rotor-Strom in dem Rotor (3) geregelt.

Die Erfindung betrifft auch eine Synchronmaschine (1), die zum Ausführen des Verfahrens (8) ausgelegt ist.

## Beschreibung

Die Erfindung betrifft ein Verfahren zum Regeln einer elektrisch erregten Synchronmaschine mit einem Stator und einem Rotor nach dem Oberbegriff des Anspruchs 1. Die Erfindung betrifft auch die elektrisch erregte Synchronmaschine.

In einer elektrisch erregten Synchronmaschine werden der Stator mit einem Stator-Strom und der Rotor mit einem Rotor-Strom bestromt. Die Stromübertragung auf den rotierenden Rotor kann dabei über Schleifringe oder über einen induktiven Energieübertrager erfolgen. Die Induktivität und dadurch die Zeitkonstante des Rotors sind hoch, so dass der Rotor-Strom in dem Rotor sich nur langsam ändern kann. Dieses Phänomen hängt auch mit der zur Verfügung stehenden Spannung im Rotor zusammen, ist jedoch bei der induktiven Stromübertragung durch eine Erhöhung der Spannung nicht zu überwinden.

Die Aufgabe der Erfindung ist es daher, für ein Verfahren zum Regeln einer elektrisch erregten Synchronmaschine der gattungsgemäßen Art und die elektrisch erregte Synchronmaschine eine verbesserte oder zumindest alternative Ausführungsform anzugeben, bei der die beschriebenen Nachteile überwunden werden.

Diese Aufgabe wird erfindungsgemäß durch den Gegenstand der unabhängigen Ansprüche gelöst. Vorteilhafte Ausführungsformen sind Gegenstand der abhängigen Ansprüche.

Die vorliegende Erfindung beruht auf dem allgemeinen Gedanken, eine zwischen einem Stator und einem Rotor einer elektrisch erregten Synchronmaschine bestehende magnetische Kopplung zum Regeln bzw. Anpassen eines im Rotor fließenden Rotor-Stroms zu verwenden.

Ein Verfahren ist zum Regeln einer elektrisch erregten Synchronmaschine mit einem Stator und einem Rotor vorgesehen. In dem Stator strömt dabei ein Stator-Strom und in dem Rotor strömt ein Rotor-Strom. Der Stator-Strom weist dabei einen auch den Rotor-Strom beeinflussenden d-Anteil und einen überwiegend das Drehmoment beeinflussenden q-Anteil auf. Erfindungsgemäß wird ein quelleerzeugter Anteil des Rotor-Stroms über eine Rotor-Quelle des Rotors erzeugt. Ein statorerzeugter Anteil des Rotor-Stroms wird über eine Anpassung des d-Anteils des Stator-Stroms erzeugt und dadurch wird der Rotor-Strom in dem Rotor geregelt.

In der erfindungsgemäßen Lösung wird eine induktive Kopplung bzw. Wechselwirkung zwischen dem Stator und dem Rotor der Synchronmaschine genutzt, um den Rotor-Strom zu beeinflussen. Der Stator-Strom kann dabei in einem rotorbezogenen d/q-System durch einen q-Vektor, der überwiegend das Drehmoment abbildet, und einen d-Vektor, der überwiegend die magnetische Flussdichte abbildet, abgebildet werden. Da für die Kopplung bzw. Wechselwirkung die Ausrichtung des Statormagnetfelds zum Rotormagnetfeld entscheidend ist, kann eine Änderung des d-Anteils des Stator-Stroms die Ausrichtung des Statormagnetfelds zu dem Rotormagnetfeld verändern. Dadurch kann der Rotor-Strom in dem Rotor beeinflusst werden. Der d-Anteil des Stator-Stroms wird gelegentlich auch als "Flussrichtung des Rotorflusses" bezeichnet.

Der Rotor-Strom wird also aus dem quelleerzeugten Anteil und dem statorerzeugten Anteil des Rotor-Stroms zusammengesetzt. Der quelleerzeugte Anteil wird dabei von der Rotor-Quelle und der statorerzeugte Anteil wird durch die Kopplung bzw. Wechselwirkung zwischen dem Statormagnetfeld und dem Rotormagnetfeld erzeugt. Dabei kann der quelleerzeugte Anteil des Rotor-Stroms beispielweise konstant sein bzw. ein konstantes Stromlevel des Rotor-Stroms definieren. Der statorerzeugte Anteil kann dagegen alle dynamischen Änderungen des Rotor-Stroms abbilden. Es versteht sich jedoch, dass diese Aufteilung in der Realität nur teilweise realisierbar ist.

Der quelleerzeugte Anteil des Rotor-Stroms kann demnach ein konstantes Stromlevel des Rotor-Stroms definieren und der statorerzeugte Anteil dynamische Änderungen des Rotor-Stroms so abbilden, dass der Rotor-Strom schneller als der quelleerzeugte Anteil des Rotor-Stroms verändert wird und dadurch das Regeln der elektrisch erregten Synchronmaschine beschleunigt wird. In anderen Worten kann eine dynamische Änderung des Rotor-Stroms durch die Änderung des statorerzeugten Anteils abgebildet werden, wobei die Änderung des statorerzeugten Anteils schneller als eine Änderung des quelleerzeugten Anteils stattfindet und dadurch die Änderung des Rotor-Stroms und insgesamt das Regeln der elektrischen Maschine beschleunigt wird. Insbesondere kann dadurch das Starten und das Stoppen der elektrischen Maschine durch die Änderung des statorerzeugten Anteils beschleunigt werden.

Da der Rotor-Strom aus dem quelleerzeugten Anteil und dem statorerzeugten Anteil des Rotor-Stroms zusammengesetzt ist, kann der quelleerzeugte Anteil im Vergleich zu herkömmlichen Lösungen reduziert werden. Entsprechend muss eine geringere Leistung zum Erzeugen des quelleerzeugten Anteiles des Rotor-Stroms an den Rotor übertragen werden. Dadurch kann ein dazu vorgesehener induktiver Energieübertrager oder ein dazu vorgesehener Schleifring-Energieübertrager kleiner dimensioniert werden. Ferner kann die Änderung des Rotor-Stroms zeitlich beschleunigt werden und daher die Regelung der Synchronmaschine verbessert werden. Dadurch kann die Effizienz der Synchronmaschine verbessert werden.

Der Stator kann vorteilhafterweise über einen Wechselrichter bestromt werden. Dabei kann der Stator mehrere Wicklungen aufweisen, die zu einer dreisträngigen bzw. dreiphasigen Sternpunkt-Schaltung miteinander verschaltet sind. Der Rotor kann über einen induktiven Energieübertrager oder einen Schleifring-Energieübertrager bestromt werden. Dabei wird eine in der stationären Rotor-Quelle bereitgestellte Spannung über den Energieübertrager induktiv oder direkt auf den drehenden Rotor übertragen. Dadurch wird in dem Rotor der quelleerzeugte Anteil des Rotor-Stroms erzeugt. Da der Rotor-Strom neben dem quelleerzeugten Anteil auch den statorerzeugten Anteil aufweist, können der quelleerzeugte Anteil des Rotor-Stroms und demnach die von der Rotor-Quelle bereitgestellte Spannung geringer als herkömmlich sein. Entsprechend muss der Energieübertrager eine geringere Spannung übertragen. In dem Verfahren kann zudem die maximale Energie, die mit dem Energieübertrager übertragbar ist, nahe vollständig statisch definiert werden. Dynamische Effekte können vorteilhafterweise durch den statorerzeugten Anteil des Rotor-Stroms abgebildet sein. Dadurch kann der Energieübertrager insgesamt kompakter dimensioniert werden.

Vorteilhafterweise kann der quelleerzeugte Anteil des Rotor-Stroms durch eine FEM-Berechnung in einem statischen Betriebspunkt der Synchronmaschine vorbestimmt werden.

In dem Verfahren kann vorgesehen sein, dass beim Starten der Synchronmaschine zum schnellen Aufbauen eines Drehmoments in dem spannungsfreien und stromfreien Rotor der d-Anteil des Stator-Stroms und dadurch der statorerzeugte Anteil des Rotor-Stroms in dem Rotor erhöht werden. Vor dem Starten der Synchronmaschine ist der Rotor spannungsfrei und stromfrei. Durch die Erhöhung des d-Anteils des Stator-Stroms wird in dem Rotor der statorerzeugte Anteil des Rotor-Stroms erzeugt und dadurch das Drehmoment aufgebaut. Dabei wächst der statorerzeugte Anteil des Rotor-Stroms schneller als der quelleerzeugte Anteil des Rotor-Stroms an. Demnach kann das Drehmoment schneller als allein mit dem quelleerzeugten Anteil des Rotor-Stroms erzeugt werden und die Synchronmaschine kann schneller gestartet werden. Schätzungsweise kann dadurch das Aufbauen des Drehmoments in der Synchronmaschine um einen Faktor zwischen 10 und 100 beschleunigt werden.

Zusätzlich kann vorgesehen sein, dass der d-Anteil des Stator-Stroms und dadurch der statorerzeugte Anteil des Rotor-Stroms mit dem Anwachsen des quelleerzeugten Anteils des Rotor-Stroms reduziert werden. Sobald also ein ausreichendes Drehmoment über den quelleerzeugten langsamer anwachsenden Anteil produzierbar ist, kann der d-Anteil reduziert werden. Dadurch können die von dem d-Anteil erzeugten Verluste in der Synchronmaschine reduziert werden bzw. nur beim schnellen Starten der Synchronmaschine entstehen.

Vorteilhafterweise kann die Rotor-Quelle beim Reduzieren des d-Anteils des Stator-Stroms eine Spannung, die eine zum Erzeugen des quelleerzeugten Anteils des Rotor-Stroms notwendige Spannung übersteigt, bereitstellen. Insbesondere kann dadurch eine Drehmomentänderung, die durch eine negative Änderung des d-Anteils des Stator-Stroms bedingt ist, kompensiert werden.

Um das Verfahren zu optimieren, kann der d-Anteil bezüglich einer Wirkungsgradsteigerung durch ein schnelles Starten der Synchronmaschine und bezüglich einer Wirkungsgradsenkung durch ein Erhöhen des d-Anteils des Stator-Stroms optimiert werden. Mit anderen Worten kann der d-Anteil bezüglich der erzeugten Verluste und bezüglich des schnellen Aufbauens des Drehmoments optimiert werden.

Beim Stoppen der Synchronmaschine kann zudem zum schnellen Erreichen einer Drehmomentfreiheit in dem Rotor der d-Anteil des Stator-Stroms verändert und dadurch der statorerzeugte Anteil des Rotor-Stroms in dem Rotor reduziert werden. Das Reduzieren des quelleerzeugten Anteils an sich ist zu langsam und kann durch die Anpassung des d-Anteils des Stator-Stroms beschleunigt werden. Hier wird also umgekehrt zum Starten der Synchronmaschine der d-Anteil so angepasst, dass das Drehmoment möglichst schnell auf null gebracht wird. Dadurch kann die funktionale Sicherheit der Synchronmaschine beispielweise bei Fehlerszenarien erhöht werden.

Bei einer vorteilhaften Ausbildung des Verfahrens kann vorgesehen sein, dass die Synchronmaschine in einem Kraftfahrzeug eingesetzt wird. Dann wird die durch den erhöhten d-Anteil erzeugte Verlustleistung als thermische Energie abgeführt und zum Heizen wenigstens einer weiteren Komponente des Kraftfahrzeugs eingesetzt. Vorzugsweise ist die weitere Komponente des Kraftfahrzeugs eine Batterie und/oder ein Motor und/oder ein Inverter. Dadurch kann die thermische Optimierung des gesamten Kraftfahrzeugs und/oder der Batterie und/oder eines Bordnetzes vorgenommen werden.

Die Erfindung betrifft auch eine elektrisch erregte Synchronmaschine mit einem Stator und mit einem Rotor. Erfindungsgemäß ist die Synchronmaschine zum Ausführen des oben beschriebenen Verfahrens ausgelegt. Um Wiederholungen zu vermeiden, wird an dieser Stelle auf die obigen Ausführungen verwiesen.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

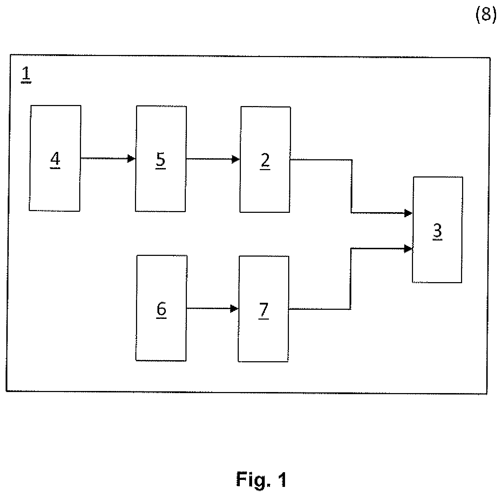

Die einzige Figur 1 zeigt schematisch ein Wechselwirkungsschema in einer erfindungsgemäßen elektrisch erregten Synchronmaschine 1. Die Synchronmaschine 1 weist dabei einen Stator 2 und einen Rotor 3 auf. Der Stator 2 wird von einer Stator-Quelle 4 über einen Wechselrichter 5 mit Stator-Strom versorgt. In einem rotorbezogenen d/q-System kann der Stator-Strom durch einen das Drehmoment abbildenden q-Vektor bzw. q-Anteil und einen die magnetische Flussdichte abbildenden d-Vektor bzw. d-Anteil dargestellt werden. Eine derartige Darstellung ist dem Fachmann bereits bekannt und wird hier nicht näher erläutert.

In dem Rotor 3 strömt ein Rotor-Strom. Dabei ist der Rotor 3 mit einer Rotor-Quelle 6 über einen induktiven Energieübertrager oder einen Schleifring-Energieübertrager 7 verbunden. Durch den Energieübertrager 7 wird eine Spannung in den Rotor 3 induktiv oder direkt übertragen und dadurch ein quelleerzeugter Anteil des Rotor-Stroms erzeugt. Der d-Anteil des Stator-Stroms erzeugt in dem Rotor 3 durch eine induktive Kopplung bzw. Wechselwirkung zusätzlich einen statorerzeugten Anteil des Rotor-Stroms. Der Rotor-Strom in dem Rotor 3 setzt sich also aus dem quelleerzeugten Anteil und dem statorerzeugten Anteil zusammen.

In einem erfindungsgemäßen Verfahren 8 wird der d-Anteil des Stator-Stroms angepasst und dadurch der statorerzeugte Anteil des Rotor-Stroms verändert. Da der d-Anteil und dadurch der statorerzeugte Anteil des Rotor-Stroms schneller als der quelleerzeugte Anteil veränderbar ist, kann die Änderung des Rotor-Stroms insgesamt beschleunigt werden. Dadurch können die Regelung der Synchronmaschine und deren Effizienz verbessert werden.

## Patentansprüche

1. Verfahren (8) zum Regeln einer elektrisch erregten Synchronmaschine (1) mit einem Stator (2) und einem Rotor (3),
- wobei in dem Stator (2) ein Stator-Strom und in dem Rotor (3) ein Rotor-Strom strömen,
- wobei der Stator-Strom einen den Rotor-Strom beeinflussenden d-Anteil und einen das Drehmoment beeinflussenden q-Anteil aufweist,
**dadurch gekennzeichnet,**
- **dass** über eine Rotor-Quelle (6) des Rotors (3) ein quelleerzeugter Anteil des Rotor-Stroms erzeugt wird, und
- **dass** über eine Anpassung des d-Anteils des Stator-Stroms ein statorerzeugter Anteil des Rotor-Stroms erzeugt und dadurch der Rotor-Strom in dem Rotor (3) geregelt wird.

2. Verfahren nach Anspruch 1,
**dadurch gekennzeichnet,**
- **dass** der Stator (2) über einen Wechselrichter (5) bestromt wird, und/oder
- **dass** der Rotor (3) über einen induktiven Energieübertrager (7) oder einen Schleifring-Energieübertrager (7) bestromt wird.

3. Verfahren nach Anspruch 1 oder 2,
**dadurch gekennzeichnet,**
**dass** der quelleerzeugte Anteil des Rotor-Stroms durch eine FEM-Berechnung in einem statischen Betriebspunkt der Synchronmaschine (1) vorbestimmt wird.

4. Verfahren nach einem der vorangehenden Ansprüche,
**dadurch gekennzeichnet,**
**dass** beim Starten der Synchronmaschine (1) zum schnellen Aufbauen eines Drehmoments in dem spannungsfreien und stromfreien Rotor (3) der d-Anteil des Stator-Stroms und dadurch der statorerzeugte Anteil des Rotor-Stroms in dem Rotor (3) erhöht werden.

5. Verfahren nach Anspruch 4,
**dadurch gekennzeichnet,**
**dass** der d-Anteil des Stator-Stroms und dadurch der statorerzeugte Anteil des Rotor-Stroms mit dem Anwachsen des quelleerzeugten Anteils des Rotor-Stroms reduziert werden.

6. Verfahren nach Anspruch 5,
**dadurch gekennzeichnet,**
**dass** die Rotor-Quelle (6) beim Reduzieren des d-Anteils des Stator-Stroms eine Spannung, die eine zum Erzeugen des quelleerzeugten Anteils des Rotor-Stroms notwendige Spannung übersteigt, bereitstellt.

7. Verfahren nach einem der vorangehenden Ansprüche,
**dadurch gekennzeichnet,**
**dass** der d-Anteil des Stator-Stroms bezüglich einer Wirkungsgradsteigerung durch ein schnelles Starten der Synchronmaschine (1) und bezüglich einer Wirkungsgradsenkung durch ein Erhöhen des d-Anteils des Stator-Stroms optimiert wird.

8. Verfahren nach einem der vorangehenden Ansprüche,
**dadurch gekennzeichnet,**
**dass** beim Stoppen der Synchronmaschine (1) zum schnellen Erreichen einer Drehmomentfreiheit in dem Rotor (3) der d-Anteil des Stator-Stroms verändert und dadurch der statorerzeugte Anteil des Rotor-Stroms in dem Rotor (3) reduziert wird.

9. Verfahren nach einem der vorangehenden Ansprüche,
**dadurch gekennzeichnet,**
**dass** die Synchronmaschine (1) in einem Kraftfahrzeug eingesetzt wird und die durch den erhöhten d-Anteil des Stator-Stroms erzeugte Verlustleistung als thermische Energie abgeführt und zum Heizen wenigstens einer weiteren Komponente des Kraftfahrzeugs, vorzugsweise einer Batterie und/oder eines Motors und/oder eines Inverters, eingesetzt wird.

10. Verfahren nach einem der vorangehenden Ansprüche,
**dadurch gekennzeichnet,**
**dass** der quelleerzeugte Anteil des Rotor-Stroms ein konstantes Stromlevel des Rotor-Stroms definieren und der statorerzeugte Anteil dynamische Änderungen des Rotor-Stroms so abbildet, dass der Rotor-Strom insgesamt schneller als der quelleerzeugte Anteil des Rotor-Stroms verändert wird und dadurch das Regeln der elektrisch erregten Synchronmaschine beschleunigt wird.

11. Verfahren nach einem der vorangehenden Ansprüche,
**dadurch gekennzeichnet,**
**dass** eine dynamische Änderung des Rotor-Stroms durch die Änderung des statorerzeugten Anteils abgebildet wird, wobei die Änderung des statorerzeugten Anteils schneller als eine Änderung des quelleerzeugten Anteils stattfindet und dadurch die Änderung des Rotor-Stroms und insgesamt das Regeln der elektrischen Maschine beschleunigt wird.

12. Elektrisch erregte Synchronmaschine (1) mit einem Stator (2) und mit einem Rotor (3), wobei die Synchronmaschine (1) zum Ausführen des Verfahrens (8) nach einem der vorangehenden Ansprüche ausgelegt ist.
